# EUROPÄISCHE PATENTSCHRIFT

(11) **EP 2 532 222 B1**
(45) Veröffentlichungstag und Bekanntmachung des Hinweises auf die Patenterteilung: **21.05.2014**
(21) Anmeldenummer: 12158997.2
(22) Anmeldetag: 12.03.2012
(51) Int. Cl.: A01D 82/00

(54) **Konditioniereinrichtung**
Conditioning apparatus
Appareil de conditionnement

(30) Priorität: 10.06.2011 DE 102011106141
(43) Veröffentlichungstag der Anmeldung: 12.12.2012
(73) Patentinhaber: CLAAS Selbstfahrende Erntemaschinen GmbH, 33428 Harsewinkel (DE)
(72) Erfinder: Laumeier, Ludger, 33397 Rietberg (DE); Lübben, Arne, 26931 Elsfleth (DE)

(56) Entgegenhaltungen:
- DE-A1- 4 215 696
- US-B2- 7 681 384

## Beschreibung

Die Erfindung betrifft eine Konditioniereinrichtung gemäß dem Oberbegriff des Patentanspruchs 1 sowie eine selbstfahrende landwirtschaftliche Erntemaschine mit einer solchen Konditioniereinrichtung.

Konditioniereinrichtungen werden in der landwirtschaftlichen Erntetechnik, insbesondere an selbstfahrenden Feldhäckslern verwendet, um im aufgenommenen Erntegut enthaltene Körner zum Zweck der besseren Verdaubarkeit bei der anschließenden Verfütterung an Tiere aufzuschließen.

Bei selbstfahrenden Feldhäckslern sind solche Konditioniereinrichtungen einem Häckselaggregat in Bezug auf die Erntgutstromrichtung nachgelagert angeordnet. In die Konditioniereinrichtung tritt demnach bereits gehäckseltes Erntegut ein, um nach dortiger Bearbeitung unterstützt von einem nachgelagerten Auswurfbeschleuniger durch eine Überladeeinrichtung in einen Ladebehälter ausgeworfen zu werden.

Zur Erfüllung der genannten Funktion des Aufschließens im Erntegut enthaltener Körner umfassen gängige Konditioniereinrichtungen zwei mit einer zur Erntegutbearbeitung geeigneten Profilierung versehene Walzen. Diese sind jeweils gegenüber einem Gehäuse der Konditioniereinrichtung um deren Längsachse drehbar gelagert und werden - beispielsweise durch einen an der Erntemaschine vorhandenen Riementrieb - angetrieben. Aufgrund deren paralleler und definiert beabstandeter Anordnung begrenzen die Walzen einen Spalt, den das zu bearbeitende Erntegut in Erntegutstromrichtung durchläuft und dabei zwischen den profilierten Walzen bearbeitet wird. Zweckmäßigerweise drehen die Walzen dazu gegenläufig, werden jedoch zur Erhöhung der Reibwirkung zwischen den Walzen bevorzugt mit geringfügig unterschiedlich hoher Drehzahl angetrieben.

Zunehmender Leistungsbedarf bei Erntemaschinen führt dazu, dass auch deren Konditioniereinrichtungen einen immer höheren Erntegutdurchsatz zu bewältigen haben. Dies erfordert immer stärker dimensionierte Komponenten, wie insbesondere Walzen, Lager, Gehäuse, Antrieb etc.. Gleichzeitig soll ein sicheres und wartungsfreundliches Betreiben und Bedienen gewährleistet sein. Zu Wartungs- und Reparaturzwecken ist es immer wieder erforderlich, auf einfache Weise Zugang zu den hohem Verschleiß ausgesetzten Walzen sowie deren Wellen und Lagern zu erhalten. Andererseits müssen diese während des Erntebetriebs nach außen abgeschlossen sein, um ein Austreten von Erntegutpartikeln bzw. von bei der Bearbeitung aus dem Erntegut austretenden Säften zu vermeiden.

Bei einer aus dem Stand der Technik bekannten Konditioniereinrichtung gemäß dem U.S.-Patent 7,681,384 B2 wird ein Zugang zu den Walzen für Wartungs- und Reparaturzwecke dadurch geschaffen, dass das Gehäuse der Konditioniereinrichtung zweigeteilt aufgebaut ist, wobei eine erste Walze an einem ersten Rahmenteil und eine zweite Walze an einem zweiten Rahmenteil gelagert ist und die beiden Rahmenteile gegeneinander aus einer geschlossenen Stellung in eine geöffnete Stellung verschwenkbar sind, so dass in letzterer eine leichte Zugänglichkeit zu jeder der beiden Walzen besteht. Insbesondere lassen sich die Walzen in der geöffneten Gehäusestellung in radialer Richtung aus dem Gehäuse entnehmen.

Nachteilig an der Konstruktion ist, dass sich das jeweilige im Einbauzustand in eine Erntemaschine oben liegende Rahmenteil aufgrund des hohen Gewichts heute verwendeter Walzen nur unter hohem Aufwand durch einen Bediener verschwenken lässt. Eine Demontage der Walzen im engen Wartungsraum eines Feldhäckslers erfordert daher viel Kraft und Geschick, wobei aufgrund der Möglichkeit des unkontrollierten Herunterklappens des oberen Rahmenteils eine nicht unerhebliche Verletzungsgefahr besteht.

Der vorliegenden Erfindung liegt daher die Aufgabe zugrunde, eine Konditioniereinrichtung der eingangs genannten Art anzugeben, die sich unter Vermeidung des Austritts von Erntegut mit hoher Leistung betreiben lässt, wobei ein sicherer und bedienungsfreundlicher Zugang zu Funktionselementen der Konditioniereinrichtung, insbesondere den Walzen zu Wartungs- und Reparaturzwecken gewährt werden soll.

Die Aufgabe wird gelöst durch eine Konditioniereinrichtung gemäß Patentanspruch 1. Demnach weist die Konditioniereinrichtung erfindungsgemäß ein zweigeteiltes Gehäuse mit zwei Gehäuseabschnitten auf, von denen ein zweiter Gehäuseabschnitt gegenüber einem ersten - ortsfesten - Gehäuseabschnitt von einer geschlossenen Stellung in eine geöffnete Stellung (und zurück) bewegbar ist. Eine solche Anordnung gewährleistet, dass in der geschlossenen Stellung das Gehäuse die Walzen gegenüber der Umgebung abschließt, so dass während des Erntebetriebs den Spalt durchlaufendes Erntegut bzw. daraus austretende Säfte nicht aus dem Gehäuse in die Umgebung austreten und dort zu Verschmutzung oder einfach zu Erntegutverlusten führen. Die beiden Gehäuseabschnitte haben demnach neben einer tragenden Funktion auch eine abdichtende Funktion.

Erfindungsgemäß sind weiterhin die Walzen jeweils mittels einer zwischen den Gehäuseabschnitten verlaufenden Welle an dem ersten - ortsfesten - Gehäuseabschnitt gelagert. Eine derartige Anordnung, zunächst der Verlauf der Wellen zwischen den Gehäuseabschnitten, gewährleistet, dass die Walzen bei geöffnetem Gehäuse auf einfache Weise zugänglich sind, da die zueinander geöffneten Gehäuseabschnitte zwangsläufig die Walzen, deren Wellen und Lagerstellen freigeben. Eine bequeme Demontage bzw. Montage in radialer Richtung zur Walzenlängsachse ist damit möglich. Die weiterhin vorgesehene Lagerung beider Wellen an dem ersten - ortsfesten - Gehäuseabschnitt bedingt, dass erfindungsgemäß an dem zweiten Gehäuseabschnitt keine Walze gelagert ist. Die Funktion des zweiten Gehäuseabschnitts ist damit erfindungsgemäß im Wesentlichen auf die eines Deckels reduziert, der zur Abdichtung des Gehäuses im Erntebetrieb dient sowie zur Versteifung des Gehäuses beiträgt. Daraus ergibt sich die vorteilhafte Wirkung, dass der zweite Gehäuseabschnitt gewichtsmäßig deutlich entlastet ist und sich somit erheblich einfacher und sicherer öffnen lässt.

Der zweite Gehäuseabschnitt kann grundsätzlich auf unterschiedliche Weise gegenüber dem ersten Gehäuseabschnitt bewegbar sein. In vorteilhafter Weiterbildung der Erfindung sind die Gehäuseabschnitte um eine parallel zu den Wellen verlaufende Achse schwenkbar miteinander verbunden.

Bevorzugt ragen die Wellen jeweils beidseitig aus dem Gehäuse hinaus, um an außerhalb des Gehäuses angeordneten Lagern gelagert zu sein. Durch eine solche Anordnung können die Lagerstellen der Wellen gut geschützt werden vor der starken Verschmutzung, die innerhalb des Gehäuses durch bearbeitetes Erntegut hervorgerufen wird.

Zur Ermöglichung einer unterschiedlich intensiven Bearbeitung durch die Konditioniereinrichtung ist zweckmäßigerweise zumindest eine der Walzen derart gelagert, dass sich der Abstand zwischen den Walzen verändern lässt. Durch Veränderung des Walzenabstands lässt sich das damit korrespondierende Spaltmaß des vom Erntegut durchlaufenen Spalts beeinflussen.

Konstruktiv vorteilhaft umsetzen ließe sich eine Abstandänderung indem zur Lagerung der zweiten Walze Drehlager dienen, die mittels einer Linearführung an dem ersten Gehäuseabschnitt verschiebbar gelagert sind. Durch Verwendung einer Linearführung kann die zweite Walze auch bei hohen wirkenden Kräften sicher und präzise in eine gewünschte Abstandsposition geführt werden.

Zum Aufbringen der Stellkraft können Aktoren unterschiedlicher Art zum Einsatz kommen. Vorteilhaft dient zur Abstandsänderung zwischen den Walzen ein Hydraulikzylinder, der die Welle der zweiten Walze gegen Vorspannung eines Federelements verschiebt. Eine solche Aktor-Federanordnung sorgt für eine präzise, ruckfreie Verstellbarkeit der Welle.

Zur Ermöglichung einer Wellenlagerung außerhalb des Gehäuses sind vorteilhaft am ersten und/oder zweiten Gehäuseabschnitt den Wellen zugeordnete und zu deren Durchführung durch das Gehäuse geformte Ausnehmungen ausgebildet. Für die Durchführung einer Welle können in aufeinandertreffenden Bereichen des ersten und zweiten Gehäuseabschnitts zur Gehäusetrennungslinie spiegelsymmetrische Ausnehmungen ausgebildet sein, die bei geschlossenem Gehäuse beispielsweise ein Rundloch oder Langloch in der Gehäusewand bilden. Zweckmäßigerweise bilden der zweiten Welle zugeordnete Ausnehmungen des ersten und/oder zweiten Gehäuseabschnitts zur Gewährleistung der Verschiebbarkeit der Welle bei geschlossenem Gehäuse ein Langloch.

Um im geschlossenen Zustand des Gehäuses, d.h. während des Konditionierbetriebs, den Austritt von Erntegut zu vermeiden, bildet das Gehäuse vorteilhaft zwischen den

Gehäuseabschnitten eine umlaufende Gehäusetrennkante, die mit einer Dichtung versehen ist.

Gemäß einer vorteilhaften Weiterbildung der Konditioniereinrichtung dient zur Abdichtung des Gehäuses im Bereich der Durchführung einer Welle durch das Gehäuse eine Dichtscheibe mit einem darin ausgebildeten Durchgang, wobei die jeweilige Welle den Durchgang der Dichtscheibe in einem Abschnitt zwischen der Walze und einem außerhalb des Gehäuses liegenden Lager durchdringt. Mittels einer solchen Dichtscheibe lässt sich das getrennte Gehäuse auch im Bereich des Wellendurchgangs sicher abdichten.

Dabei kann die Dichtscheibe vorteilhaft drehfest gegenüber dem Gehäuse angeordnet und mittels einer Wellendichtung, beispielsweise einem Radialwellendichtring, gegenüber der Welle abgedichtet sein.

Zusätzlich kann vorteilhaft die Dichtscheibe in zumindest einem radial von deren Durchgang beabstandeten Bereich eine umlaufende Dichtung aufweisen, die bei geschlossenem Gehäuse die Dichtscheibe gegenüber dem Gehäuse, insbesondere gegenüber den aneinandergrenzenden Gehäuseabschnitten, abdichtet.

Vorteilhaft ist weiterhin am Umfang der Dichtscheibe eine zur Aufnahme eines Kantenbereichs des Gehäuses geeignete Nut ausgebildet. Durch Aufnahme eines Kantenbereichs des Gehäuses in der Nut ergibt sich - abhängig von der Tiefe der Nut - eine beidseitige Überdeckung durch Dichtscheibe, wodurch eine besonders effektive labyrinthartige Abdichtung geschaffen ist. Durch zusätzliche Dichtringe zwischen Gehäuse und Dichtscheibe - diese können aufgrund der labyrinthartig die Gehäusekante umgreifenden Dichtscheibe innerhalb und/oder außerhalb des Gehäuses angeordnet sein - lässt sich eine hohe Abdichtwirkung erzielen.

Die Verwendung einer wie zuvor beschriebenen Dichtscheibe, die der zweiten Welle zugeordnet ist, erweist sich als besonders zweckmäßig, wenn diese parallel zur Linearführung der zweiten Welle verschiebbar gegenüber dem Gehäuse ist. Eine solche Ausgestaltung gewährleistet eine sichere Abdichtung des Gehäuses auch bei abstandveränderlicher zweiter Walze.

Zweckmäßigerweise sollte dabei die umlaufende Dichtung der Dichtscheibe der zweiten Welle ein vom ersten und/oder zweiten Gehäuseabschnitt gebildetes Langloch in sämtlichen Walzenabstandspositionen überdecken.

Zur Gewährleistung einer möglichst sicheren und einfachen Bedienung der Konditioniereinrichtung sollte der zweite Gehäuseabschnitt bei geschlossenem Gehäuse oberhalb des ersten Gehäuseabschnitts angeordnet sein. Der zweite Gehäuseabschnitt bildet in diesem Fall einen auf dem ersten Gehäuseabschnitt aufliegenden Deckel, wodurch bereits schwerkraftbedingt Dichtungskräfte auf die Gehäusetrennungslinie aufgebracht werden.

Weiterhin betrifft die Erfindung eine selbstfahrende landwirtschaftliche Erntemaschine, insbesondere einen selbstfahrenden Feldhäcksler, der mit einer wie zuvor beschriebenen Konditioniereinrichtung ausgestattet ist, wobei die Konditioniereinrichtung im Erntegutkanal der Erntemaschine angeordnet ist.

Die Erfindung wird im Folgenden unter Hinweis auf die beigefügten Figuren anhand eines Ausführungsbeispiels näher erläutert. Daraus ergeben sich auch weitere Einzelheiten und Vorteile der Erfindung. Es zeigen:
- Fig. 1: eine schematische Seitenansicht eines selbstfahrenden Feldhäckslers,
- Fig. 2: eine perspektivische Ansicht einer erfindungsgemäßen Konditioniereinrichtung gemäß dem einzigen Ausführungsbeispiel der Erfindung in geöffneter Gehäusestellung,
- Fig. 3: eine perspektivische der Konditioniereinrichtung aus Fig. 2, wobei zur besseren Sichtbarkeit einer Dichtscheibe das in der Ansicht vordere Lager der zweiten Welle nicht dargestellt ist,
- Fig. 4: eine Seitenansicht der erfindungsgemäßen Konditioniereinrichtung in geschlossener Gehäusestellung,
- Fig. 5: eine Schnittansicht der erfindungsgemäßen Konditioniereinrichtung gemäß der Schnittlinie B-B aus Fig. 4.

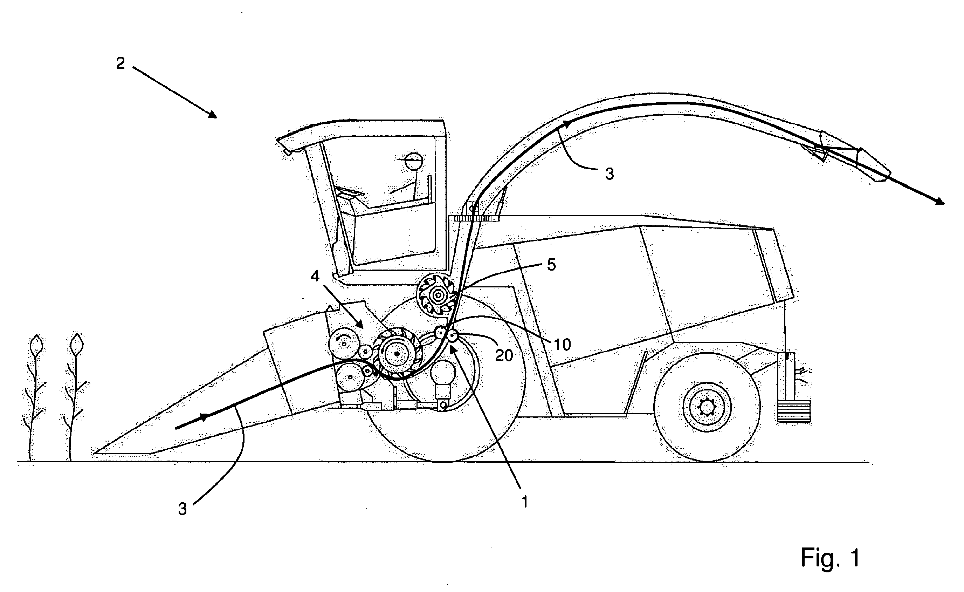

Fig. 1 zeigt in schematischer Seitenansicht einen selbstfahrenden Feldhäcksler 2 bei der Ernte auf dem Feld. Der Feldhäcksler 2 erntet Pflanzen vom Feld, um das erhaltene Erntegut 3 in Form eines Erntegutstroms (in Fig. 1 als mit Pfeilen versehene Linie angedeutet) durch die Bearbeitungs- und Förderorgane des Feldhäckslers 2 zu führen und mittels einer Überladeeinrichtung in einen - nicht dargestellten - Ladebehälter abzuwerfen. Die Bearbeitungs- und Förderorgane des Feldhäckslers 2 umfassen unter anderem ein Häckselaggregat 4, das mittels einer rotierenden, mit Messern ausgestatteten Häckseltrommel das Erntegut in Zusammenwirkung mit einer Gegenschneide zerkleinert, eine dem Häckselaggregat 4 in einem Förderschacht in Gutstromrichtung nachgelagerte Konditioniereinrichtung 1, die nachfolgend im Detail beschrieben wird, sowie einen der Konditioniereinrichtung 1 im Förderschacht in Gutstromrichtung nachgelagerten Auswurfbeschleuniger 5, welcher das Erntegut 3 mittels rotierender Wurfpaddel für den sicheren Auswurf durch die Überladeeinrichtung beschleunigt. Bei der zwischen dem Häckselaggregat 4 und dem Auswurfbeschleuniger 5 im Erntgutkanal angeordneten Konditioniereinrichtung 1 handelt es sich bevorzugt um eine nachfolgend anhand der weiteren Fig. zu beschreibende erfindungsgemäße Konditioniereinrichtung 1.

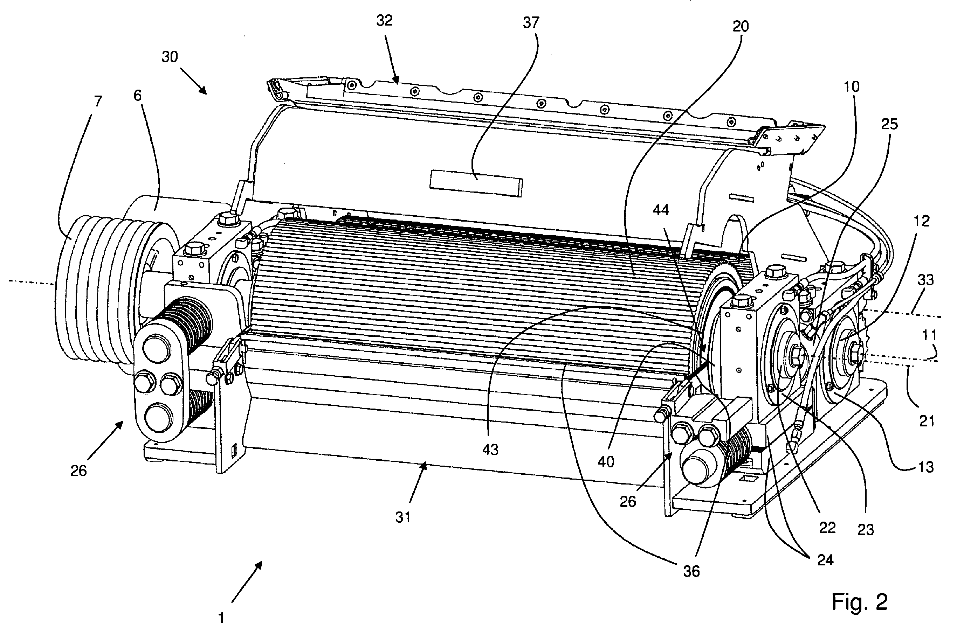

Fig. 2 zeigt eine erfindungsgemäße Konditioniereinrichtung 1 in perspektivische Ansicht. Die Konditioniereinrichtung 1 umfasst im Wesentlichen ein Walzenpaar, bestehend aus einer ersten Walze 10 und einer zweiten Walze 20, die jeweils gegenüber einem Gehäuse 30 um deren Längsachse 11 bzw. 21 drehbar gelagert sind. Zum Antrieb der Walzen 10, 20 dienen zwei Riemenrollen 6, 7. Die Riemenrolle 6 steht über eine Welle 12 mit der ersten Walze 10, die Riemenrolle 7 über eine Welle 22 mit der zweiten Walze 20 in Antriebsverbindung.

Die Walzen 10, 20 sind parallel zueinander und derart beabstandet voneinander angeordnet, dass diese einen im Betrieb der Konditioniereinrichtung 1 von Erntegut durchlaufenen Spalt begrenzen. Zur Förderung des Ernteguts in eine Gutstromrichtung sind die Walzen 10, 20 gegenläufig angetrieben, wobei aufgrund der profilierten Oberflächen der Walzen 10, 20 sowie eines geringfügigen Drehzahlunterschieds der Wellen 12, 22 das Erntegut zwischen den Walzen bearbeitet (gerieben, gequetscht, zerfasert) wird, um darin enthaltene Körner aufzuschließen.

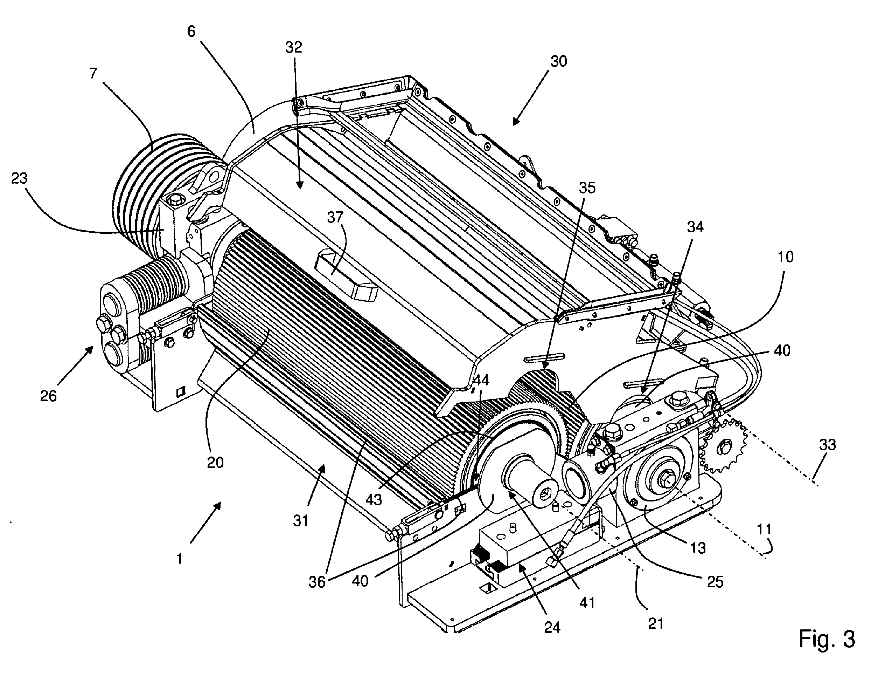

Das Gehäuse 30 ist zweigeteilt und umfasst einen ersten Gehäuseabschnitt 31, mit dem ein zweiter Gehäuseabschnitt 32 um eine parallel zu den Wellen 12, 22 verlaufende Achse 33 schwenkbar verbunden ist. Der zweite (obere) Gehäuseabschnitt 32 bildet so einen Deckel für den als Tragrahmen für Funktionselemente der Konditioniereinrichtung 1 dienenden Gehäuseabschnitt 31. In den Fig. 2 und 3 befindet sich der zweite Gehäuseabschnitt 32 gegenüber dem ersten Gehäuseabschnitt 31 in einer angehobenen Stellung, das Gehäuse 30 ist geöffnet, wodurch die Walzen 10, 20 sowie sonstige Funktionselemente von außerhalb des Gehäuses 30 beispielsweise zu Wartungs- und Reparaturzwecken zugänglich sind.

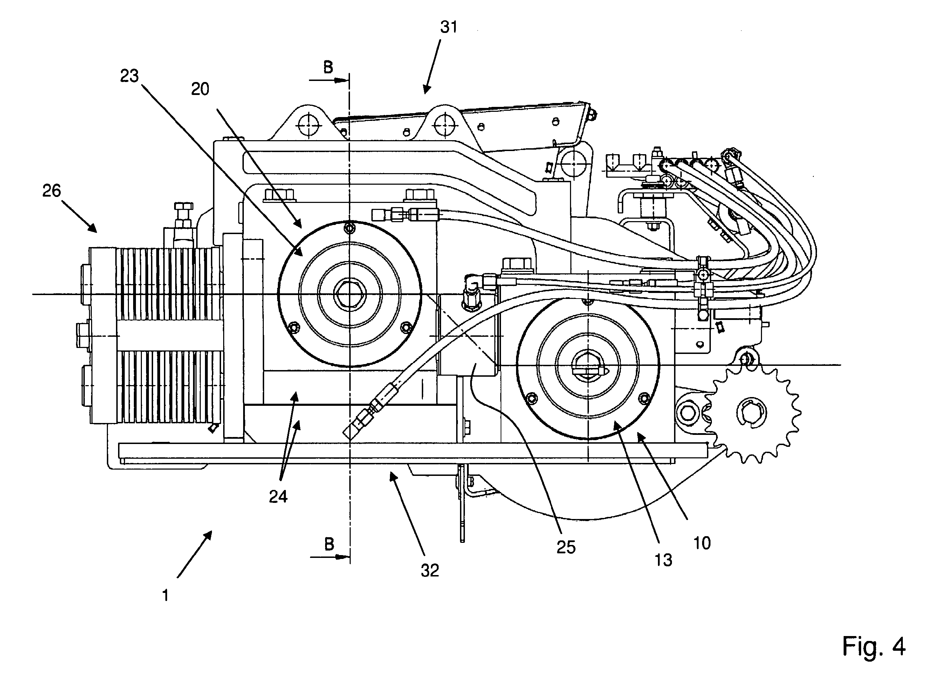

Durch Absenken des zweiten Gehäuseabschnitts 32 lässt sich das Gehäuse 30 in eine geschlossene Stellung (vgl. Fig. 4) bringen, in der das Gehäuse 30 die Walzen 10, 20 gegenüber der Umgebung abschließt. Die geschlossene Gehäusestellung 30 wird zum einsatzgemäßen Betrieb der Konditioniereinrichtung 1 bei der Ernte gewählt, um zu verhindern, dass bei der Erntegutbearbeitung entstehende Säfte oder sonstige Erntegutbestandteile aus dem Arbeitsbereich der Walzen 10, 20 nach außerhalb des Gehäuses 30 gelangen und dort weitere Funktionselemente oder beispielsweise den Wartungsraum eines Feldhäckslers 2 verschmutzen. Zum manuellen Öffnen und Schließen des Gehäuses 30 ist am zweiten Gehäuseabschnitt 32 ein Handgriff 37 angebracht, der - bei eingebauter Konditioniereinrichtung 1 in einen Feldhäcksler 2 gemäß Fig. 1 - von einem hinter der Konditioniereinrichtung 1 befindlichen Wartungsraum leicht zugänglich ist.

Wie in Fig. 2 und 3 zu sehen, sind die Walzen 10 und 20 jeweils auf eine ersten Welle 12 bzw. einer zweiten Welle 22 montiert. Die Wellen 12 und 22 ragen jeweils beidseitig aus dem Gehäuse 30 und sind in außerhalb des Gehäuses 30 angeordneten baugleichen ersten Drehlagern 13 bzw. zweiten Drehlagern 23 gelagert. Die der ersten Welle 12 zugeordneten Drehlager 13 sind dabei direkt am ersten Gehäuseabschnitt 31 befestigt.

Im Unterschied dazu sind die der zweiten Welle 22 zugeordneten Drehlager 23 mittels einer Linearführung 24 gegenüber dem ersten Gehäuseabschnitt 31 gelagert. Die Linearführung 24 ist, wie besser in Fig. 3 zu erkennen, in der ein Lager 23 zwecks besserer Sichtbarkeit weggelassen wurde, als T-Führung ausgeführt und ermöglicht damit ein Verschieben der zweiten Welle 22 quer zu deren Längsachse 21, wodurch sich der Abstand zwischen den Walzen 10 und 20 und damit die für die Erntegutbearbeitung relevante Spalteweite verändern lässt.

Fig. 4 zeigt in einer Seitenansicht der Konditioniereinrichtung 1, dass zur Abstandsänderung zwischen den Walzen 10, 20 ein Hydraulikzylinder 25 dient, der zwischen dem ortsfest angeordneten Lager 13 und dem verschiebbaren Lager 23 angeordnet ist. Zur präzisen und ruckfreien Positionsverstellung des Lagers 23 wirkt der Hydraulikzylinder 25 gegen die Vorspannkraft eines als Tellerfederanordnung ausgeführten Federelements 26.

Fig. 3 zeigt, dass für die Durchführung der ersten Welle 12 und der zweiten Welle 22 durch das Gehäuse 30 Ausnehmungen 34, 35 im ersten und zweiten Gehäuseabschnitt 31, 32 ausgebildet sind. Für die erste Welle 12 sind die Ausnehmungen 34 im ersten und zweiten Gehäuseabschnitt 31, 32 jeweils etwa halbkreisförmig und ergeben bei geschlossenem Gehäuse 30 einen runden Durchgang für die Welle 12. Für die zweite Welle 22 sind die Ausnehmungen 35 im ersten und zweiten Gehäuseabschnitt 31, 32 jeweils derart ausgebildet, dass sich bei geschlossenem Gehäuse 30 ein Langloch als Durchgang für die Welle 22 ergibt. Damit ist eine Verschiebbarkeit der Welle 22 parallel zur Linearführung 24 zur Änderung des Walzenabstands gewährleistet.

Um bei geschlossenem Gehäuse 30, insbesondere beim Betrieb der Konditioniereinrichtung 1, dessen Dichtheit sicherzustellen, weist die Konditioniereinrichtung 1 verschiedene weitere Merkmale auf.

Fig. 3 zeigt, dass der erste und zweite Gehäuseabschnitt 31, 32 über einen Umfangsbereich außer im Bereich der Wellendurchgänge durch das Gehäuse 30, eine gemeinsame Gehäusetrennkante bilden. Diese umlaufende, nur von den Wellendurchgängen unterbrochene Gehäusetrennkante, ist mit einer Dichtung 36 versehen.

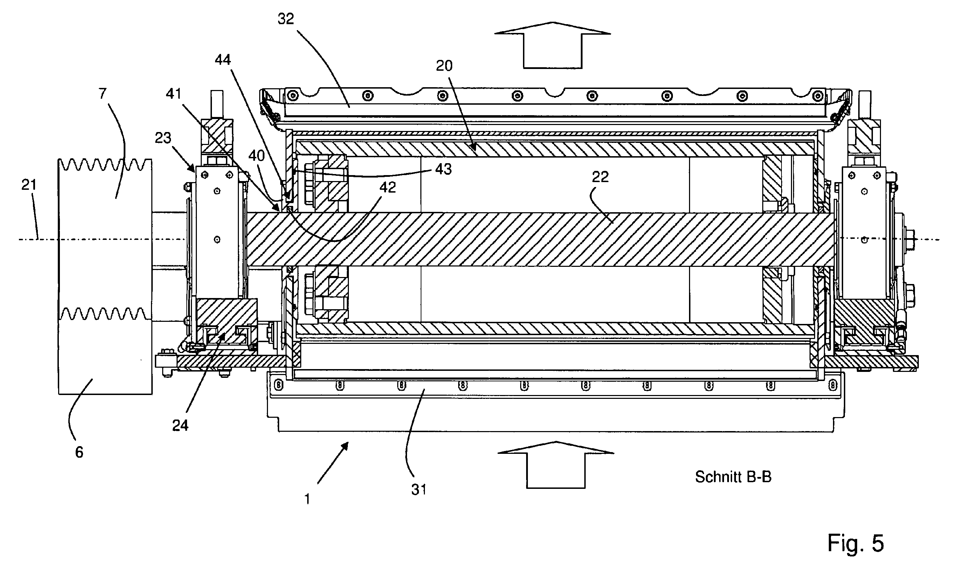

Im besonderen Bereich der Wellendurchgänge dient zur Abdichtung des Gehäuses 30 eine Dichtscheibe 40, wie in den Ansichten der Fig. 2, 3 und 5 zu sehen. Die Dichtscheibe 40 weist, wie am besten in Fig. 5 zu sehen, einen Durchgang 41 auf, den die jeweilige Welle 22 (bzw. gleichermaßen Welle 12) in einem Abschnitt zwischen der Walze 20 (bzw. 10) und dem außerhalb des Gehäuses 30 angeordneten Lager 23 (bzw. 13) durchdringt. Die Dichtscheibe 40 ist jeweils drehfest gegenüber dem Gehäuse 30 angeordnet und mittels einer Wellendichtung 42 gegenüber der Welle (hier: zweite Welle 22) abgedichtet. Auf grundsätzlich gleiche Weise dichtet eine für die erste Welle 12 vorgesehene Dichtscheibe gegenüber der Welle 12 ab.

Wie am besten den Fig. 3 und 5 zu entnehmen, weist die Dichtscheibe 40 neben der Wellendichtung 42 in zumindest einem radial von deren Durchgang 41 (für die Welle) beabstandeten Bereich eine umlaufende Dichtung 43 auf. Diese kann als Dichtring ausgeführt sein und dichtet bei geschlossenem Gehäuse 30 die Dichtscheibe 40 gegenüber dem Gehäuse 30, insbesondere dem ersten Gehäuseabschnitt 31 und dem zweiten Gehäuseabschnitt 32 ab.

Fig. 5 zeigt, dass in einem Umfangsbereich der Dichtscheibe 40 eine zur Aufnahme der Kantenbereiche der Gehäuseabschnitte 31 und 32 geeignete Nut 44 ausgebildet ist. Demnach wird das Gehäuse 30 durch die Dichtscheibe 40 sowohl nach innen als auch nach außen überdeckt. Neben der hier innen umlaufenden Dichtung 43 könnte wegen der labyrinthartigen Anordnung der Dichtscheibe 40 zum Gehäuse 30 auch eine - nicht dargestellte - gehäuseaußenseitig umlaufende Dichtung vorgesehen sein, um die Dichtwirkung nochmals zu erhöhen.

Fig. 3 zeigt, dass die der zweiten Welle 22 zugeordnete Dichtscheibe 40 in deren außerhalb des Gehäuses 30 liegendem Bereich am Umfang zwei gegenüberliegende Abflachungen aufweist. Diese Abflachungen, die - bei geschlossenem Gehäuse 30 - mit einem länglichen Vorsprung am zweiten Gehäuseabschnitt 32 in Gleitkontakt stehen, sorgen dafür, dass die Dichtscheibe 40 zwar drehfest gegenüber dem Gehäuse 30, jedoch mit der zweiten Welle 22 gegenüber dem Gehäuse 30 verschiebbar ist.

Anhand Fig. 3 ist weiterhin verständlich, dass zweckmäßigerweise die umlaufende Dichtung 43 der Dichtscheibe 40 das vom ersten und zweiten Gehäuseabschnitt 31, 32 gebildete Langloch in sämtlichen Walzenabstandspositionen überdecken sollte, um bei sämtlichen Abstandspositionen eine Abdichtung des Gehäuses 30 zu erzielen.

Die in Fig. 5 eingezeichneten breiten Pfeile ober- und unterhalb der Konditioniereinrichtung 1 geben die Stromrichtung des Ernteguts durch die Konditioniereinrichtung 1 an. In bevorzugter Weise ist die so beschriebene Konditioniereinrichtung 1 in eine selbstfahrende landwirtschaftliche Erntemaschine in Form eines Feldhäckslers eingebaut.

### Bezugszeichenliste

- 1: Konditioniereinrichtung
- 2: Feldhäcksler
- 3: Erntegut
- 4: Häckselaggregat
- 5: Auswurfbeschleuniger
- 6: Riemenrolle
- 7: Riemenrolle
- 10: erste Walze
- 11: Längsachse (erste Walze)
- 12: erste Welle
- 13: erstes Lager
- 20: zweite Walze
- 21: Längsachse (zweite Walze)
- 22: zweite Welle
- 23: zweites Lager
- 24: Linearführung
- 25: Hydraulikzylinder
- 26: Tellerfederanordnung
- 30: Gehäuse
- 31: erster Gehäuseabschnitt
- 32: zweiter Gehäuseabschnitt
- 33: Schwenkachse
- 34: Ausnehmung
- 35: Ausnehmung
- 36: Dichtung
- 37: Griff
- 40: Dichtscheibe
- 41: Durchgang
- 42: Wellendichtung
- 43: Dichtung

## Patentansprüche

1. Konditioniereinrichtung (1) für eine landwirtschaftliche Erntemaschine (2) mit einer ersten und einer zweiten Walze (10, 20), die jeweils gegenüber einem Gehäuse (30) um deren Längsachse (11, 21) drehbar gelagert sind, um einen von Erntegut (3) durchlaufenen Spalt zu begrenzen, wobei das Gehäuse (30) einen ersten und einen zweiten Gehäuseabschnitt (31, 32) umfasst, von denen der zweite Gehäuseabschnitt (32) relativ zum ersten Gehäuseabschnitt (31) bewegbar ist von einer geschlossenen Stellung, in der das Gehäuse (30) die Walzen (10, 20) gegenüber der Umgebung abschließt, in eine geöffnete Stellung, in der die Walzen (10, 20) von außerhalb des Gehäuses (30) zugänglich sind,
**dadurch gekennzeichnet, dass** die Walzen (10, 20) jeweils mittels einer zwischen den Gehäuseabschnitten (31, 32) verlaufenden Welle (12, 22) an dem ersten Gehäuseabschnitt (31) gelagert sind.

2. Konditioniereinrichtung nach Anspruch 1, **dadurch gekennzeichnet, dass** die Gehäuseabschnitte (31, 32) um eine parallel zu den Wellen (12, 22) verlaufende Achse (33) schwenkbar miteinander verbunden sind.

3. Konditioniereinrichtung nach Anspruch 1 oder 2, **dadurch gekennzeichnet, dass** die Wellen (12, 22) jeweils beidseitig aus dem Gehäuse (30) hinausragen, um an außerhalb des Gehäuses (30) angeordneten Lagern (13, 23) gelagert zu sein.

4. Konditioniereinrichtung nach einem der vorigen Ansprüche, **dadurch gekennzeichnet, dass** eine der Walzen (20) derart gelagert ist, dass sich der Abstand zwischen den Walzen (10, 20) verändern lässt.

5. Konditioniereinrichtung nach einem der vorigen Ansprüche, **dadurch gekennzeichnet, dass** zur Lagerung der zweiten Walze (20) Drehlager (23) dienen, die mittels einer Linearführung (24) an dem ersten Gehäuseabschnitt (31) verschiebbar gelagert sind.

6. Konditioniereinrichtung nach Anspruch 4 oder 5, **dadurch gekennzeichnet, dass** zur Abstandsänderung zwischen den Walzen (10, 20) ein Hydraulikzylinder (25) dient, der die Welle (22) der zweiten Walze (20) gegen Vorspannung eines Federelements (26) verschiebt.

7. Konditioniereinrichtung nach einem der vorigen Ansprüche, **dadurch gekennzeichnet, dass** am ersten und/oder zweiten Gehäuseabschnitt (31, 32) den Wellen (12, 22) zugeordnete und zu deren Durchführung durch das Gehäuse (30) geformte Ausnehmungen (34, 35) ausgebildet sind.

8. Konditioniereinrichtung nach einem der vorigen Ansprüche, **dadurch gekennzeichnet, dass** der zweiten Welle (20) zugeordnete Ausnehmungen (35) des ersten und/oder zweiten Gehäuseabschnitts (31, 32) zur Gewährleistung der Verschiebbarkeit der Welle (20) bei geschlossenem Gehäuse (30) ein Langloch bilden.

9. Konditioniereinrichtung nach einem der vorigen Ansprüche, **dadurch gekennzeichnet, dass** bei geschlossenem Gehäuse (30) zwischen den Gehäuseabschnitten (31, 32) eine umlaufende Gehäusetrennkante gebildet ist, die mit einer Dichtung (36) versehen ist.

10. Konditioniereinrichtung nach einem der vorigen Ansprüche, **dadurch gekennzeichnet, dass** zur Abdichtung des Gehäuses (30) im Bereich der Durchführung einer Welle (12, 22) durch das Gehäuse (30) eine Dichtscheibe (40) mit einem darin ausgebildeten Durchgang (41) dient, wobei die jeweilige Welle (12, 22) den Durchgang (41) der Dichtscheibe (40) in einem Abschnitt zwischen der Walze (10, 20) und einem außerhalb des Gehäuses (30) liegenden Lager (13, 23) durchdringt.

11. Konditioniereinrichtung nach Anspruch 10, **dadurch gekennzeichnet, dass** die Dichtscheibe (40) drehfest gegenüber dem Gehäuse (30) angeordnet und mittels einer Wellendichtung (42) gegenüber der Welle (12, 22) abgedichtet ist.

12. Konditioniereinrichtung nach Anspruch 10 oder 11, **dadurch gekennzeichnet, dass** die Dichtscheibe (40) in zumindest einem radial von deren Durchgang (41) beabstandeten Bereich eine umlaufende Dichtung (43) aufweist, die bei geschlossenem Gehäuse (30) die Dichtscheibe (40) gegenüber dem Gehäuse (30) abdichtet.

13. Konditioniereinrichtung nach einem der Ansprüche 10 bis 12, **dadurch gekennzeichnet, dass** am Umfang der Dichtscheibe (40) eine zur Aufnahme eines Kantenbereichs des Gehäuses (30) geeignete Nut (44) ausgebildet ist.

14. Konditioniereinrichtung nach einem der Ansprüche 10 bis 13, **dadurch gekennzeichnet, dass** eine der zweiten Welle (22) zugeordnete Dichtscheibe (40) parallel zur Linearführung (24) der zweiten Welle (22) verschiebbar gegenüber dem Gehäuse (30) ist.

15. Konditioniereinrichtung nach Anspruch 14, **dadurch gekennzeichnet, dass** die umlaufende Dichtung (43) der Dichtscheibe (40) der zweiten Welle (22) das vom ersten und/oder zweiten Gehäuseabschnitt (31, 32) gebildete Langloch in sämtlichen Walzenabstandspositionen überdeckt.

16. Konditioniereinrichtung nach einem der vorigen Ansprüche, **dadurch gekennzeichnet, dass** der zweite Gehäuseabschnitt (32) bei geschlossenem Gehäuse (30) oberhalb des ersten Gehäuseabschnitts (31) angeordnet ist.

17. Selbstfahrende landwirtschaftliche Erntemaschine mit einer in deren Erntegutkanal angeordneten Konditioniereinrichtung (1) nach einem der vorigen Ansprüche.

## Claims

1. A conditioning apparatus (1) for an agricultural harvester (2) comprising a first and a second roller (10, 20) which are respectively mounted rotatably about their longitudinal axis (11, 12) with respect to a housing (30) to define a gap through which crop material (30) passes, wherein the housing (30) includes a first and a second housing portion (31, 32) of which the second housing portion (32) is moveable relative to the first housing portion (31) from a closed position in which the housing (30) closes off the rollers (10, 20) relative to the environment, into an opened position in which the rollers (10, 20) are accessible from outside the housing (30),
**characterised in that** the rollers (10, 20) are respectively mounted to the first housing portion (31) by means of a shaft (12, 22) extending between the housing portions (31, 32).

2. A conditioning apparatus according to claim 1 **characterised in that** the housing portions (31, 32) are connected together pivotably about an axis (33) extending parallel to the shafts (12, 22).

3. A conditioning apparatus according to claim 1 or claim 2 **characterised in that** the shafts (12, 22) respectively project at both sides out of the housing (30) to be mounted at bearings (13, 23) arranged outside the housing (30).

4. A conditioning apparatus according to one of the preceding claims **characterised in that** one of the rollers (20) is so supported that the spacing between the rollers (10, 20) can be altered.

5. A conditioning apparatus according to one of the preceding claims **characterised in that** rotary bearings (23) serve to mount the second roller (20), which rotary bearings are mounted displaceably by means of a linear guide (24) at the first housing portion (31).

6. A conditioning apparatus according to claim 4 or claim 5 **characterised in that** a hydraulic cylinder (25) serves to alter the spacing between the rollers (10, 20), which hydraulic cylinder displaces the shaft (22) of the second roller (20) against the biasing force of a spring element (26).

7. A conditioning apparatus according to one of the preceding claims **characterised in that** recesses (34, 35) which are associated with the shafts (12, 22) and which are shaped for the shafts to pass through the housing (30) are provided on the first and/or second housing portion (31, 32).

8. A conditioning apparatus according to one of the preceding claims **characterised in that** recesses (35), associated with the second shaft (20), of the first and/or second housing portion (31, 32) form a slot to ensure displaceability of the shaft (20) when the housing (30) is closed.

9. A conditioning apparatus according to one of the preceding claims **characterised in that** when the housing (30) is closed a peripherally extending housing separating edge provided with a seal (36) is formed between the housing portions (31, 32).

10. A conditioning apparatus according to one of the preceding claims **characterised in that** a sealing disk (40) having a through opening (41) provided therein serves to seal off the housing (30) in the region where a shaft (12, 22) passes through the housing (30), wherein the respective shaft (12, 22) passes through the through opening (41) in the sealing disk (40) in a portion between the roller (10, 20) and a bearing (13, 23) which is disposed outside the housing (30).

11. A conditioning apparatus according to claim 10 **characterised in that** the sealing disk (40) is arranged non-rotatably with respect to the housing (30) and is sealed off with respect to the shaft (12, 22) by means of a shaft seal (42).

12. A conditioning apparatus according to claim 10 or claim 11 **characterised in that** in at least one region spaced radially from its through opening (41) the sealing disk (40) has a peripherally extending seal (43) which when the housing (30) is closed seals off the sealing disk (40) with respect to the housing (30).

13. A conditioning apparatus according to one of claims 10 to 12 **characterised in that** a groove (44) suitable for receiving an edge region of the housing (30) is provided at the periphery of the sealing disk (40).

14. A conditioning apparatus according to one of claims 10 to 13 **characterised in that** a sealing disk (40) associated with the second shaft (22) is displaceable with respect to the housing (30) parallel to the linear guide (24) of the second shaft (22).

15. A conditioning apparatus according to claim 14 **characterised in that** the peripherally extending seal (43) of the sealing disk (40) of the second shaft (22) covers over the slot formed by the first and/or second housing portion (31, 32) in all the roller spacing positions.

16. A conditioning apparatus according to one of the preceding claims **characterised in that** when the housing (30) is closed the second housing portion (32) is arranged above the first housing portion (31).

17. A self-propelled agricultural harvester having a conditioning apparatus (1) arranged in the crop material passage thereof according to one of the preceding claims.

## Revendications

1. Dispositif de conditionnement (1) pour une machine agricole de récolte (2) comportant un premier et un deuxième rouleau (10, 20) qui sont chacun montés tournants autour de leur axe longitudinal (11, 21) par rapport à un carter (30) de manière à délimiter une fente à travers laquelle passe un produit de récolte (3), le carter (30) comprenant une première et une deuxième partie de carter (31, 32), dont la deuxième partie de carter (32) est déplaçable par rapport à la première partie de carter (31) d'une position fermée, dans laquelle le carter (30) isole les rouleaux (10, 20) par rapport à l'environnement, vers une position ouverte dans laquelle les rouleaux (10, 20) sont accessibles de l'extérieur du carter (30), **caractérisé en ce que** les rouleaux (10, 20) sont chacun montés sur la première partie de carter (31) au moyen d'un arbre (12, 22) qui s'étend entre les parties de carter (31, 32).

2. Dispositif de conditionnement selon la revendication 1, **caractérisé en ce que** les parties de carter (31, 32) sont reliées entre elles de manière à pouvoir pivoter autour d'un axe (33) qui s'étend parallèlement aux arbres (12, 22).

3. Dispositif de conditionnement selon la revendication 1 ou 2, **caractérisé en ce que** les arbres (12, 22) dépassent chacun des deux côtés du carter (30) pour être montés sur des paliers (13, 23) disposés à l'extérieur du carter (30).

4. Dispositif de conditionnement selon l'une des revendications précédentes, **caractérisé en ce qu'**un des rouleaux (20) est monté de façon que l'écartement entre les rouleaux (10, 20) puisse être modifié.

5. Dispositif de conditionnement selon l'une des revendications précédentes, **caractérisé en ce que** le deuxième rouleau (20) est monté à l'aide de paliers rotatifs (23) qui sont montés coulissants sur la partie de carter (31) au moyen d'un guide linéaire (24).

6. Dispositif de conditionnement selon la revendication 4 ou 5, **caractérisé en ce que** la modification d'écartement entre les rouleaux (10, 20) est réalisée à l'aide d'un vérin hydraulique (25) qui déplace l'arbre (22) du deuxième rouleau (20) à l'encontre de la précontrainte d'un élément élastique (26).

7. Dispositif de conditionnement selon l'une des revendications précédentes, **caractérisé en ce que** des évidements (34, 35) associés aux arbres (12, 22) et formés pour permettre le passage de ceux-ci à travers le carter (30) sont ménagés sur la première et/ou deuxième partie de carter (31, 32).

8. Dispositif de conditionnement selon l'une des revendications précédentes, **caractérisé en ce que** des évidements (35) de la première et/ou deuxième partie de carter (31, 32) associés au deuxième arbre (20) forment un trou oblong pour assurer la mobilité de l'arbre (20) lorsque le carter (30) est fermé.

9. Dispositif de conditionnement selon l'une des revendications précédentes, **caractérisé en ce que**, lorsque le carter (30) est fermé, une arête de séparation de carter périphérique pourvue d'un joint (36) est formée entre les parties de carter (31, 32).

10. Dispositif de conditionnement selon l'une des revendications précédentes, **caractérisé en ce que** l'étanchéité du carter (30) dans la zone du passage d'un arbre (12, 22) à travers le carter (30) est réalisée à l'aide d'un disque d'étanchéité (40) dans lequel est ménagé un passage (41), l'arbre (12, 22) respectif traversant le passage (41) du disque d'étanchéité (40) dans une partie comprise entre le rouleau (10, 20) et un palier (13, 23) situé à l'extérieur du carter (30).

11. Dispositif de conditionnement selon la revendication 10, **caractérisé en ce que** le disque d'étanchéité (40) est disposé de manière fixe en rotation par rapport au carter (30) et est rendu étanche par rapport à l'arbre (12, 22) au moyen d'une garniture étanche d'arbre (42).

12. Dispositif de conditionnement selon la revendication 10 ou 11, **caractérisé en ce que** le disque d'étanchéité (40) présente, dans au moins une zone distante radialement de son passage (41), un joint périphérique (43) qui rend le disque d'étanchéité (40) étanche par rapport au carter (30) lorsque le carter (30) est fermé.

13. Dispositif de conditionnement selon l'une des revendications 10 à 12, **caractérisé en ce qu'**une rainure (44) apte à recevoir une zone d'arête du carter (30) est ménagée à la périphérie du disque d'étanchéité (40).

14. Dispositif de conditionnement selon l'une des revendications 10 à 13, **caractérisé en ce qu'**un disque d'étanchéité (40) associé au deuxième arbre (22) peut coulisser par rapport au carter (30) parallèlement au guide linéaire (24) du deuxième arbre (22).

15. Dispositif de conditionnement selon la revendication 14, **caractérisé en ce que**, dans toutes les positions d'écartement des rouleaux, le joint périphérique (43) du disque d'étanchéité (40) du deuxième arbre (22) recouvre le trou oblong formé par la première et/ou deuxième partie de carter (31, 32).

16. Dispositif de conditionnement selon l'une des revendications précédentes, **caractérisé en ce que**, lorsque le carter (30) est fermé, la deuxième partie de carter (32) est disposée au-dessus de la première partie de carter (31).

17. Machine agricole de récolte automotrice comprenant, disposé dans son canal de produit de récolte, un dispositif de conditionnement (1) selon l'une des revendications précédentes.
